# EUROPEAN PATENT APPLICATION

(11) **EP 4 474 861 A1**
(43) Date of publication of application: **11.12.2024**
(21) Application number: 23752839.3
(22) Date of filing: 06.02.2023
(51) Int. Cl.: G01S 7/4865, G01C 3/06, G01S 7/4863, G01S 17/894

(54) **DISTANCE MEASURING DEVICE AND DISTANCE MEASURING METHOD**

(30) Priority: 09.02.2022 JP 2022018574
(71) Applicant: National University Corporation Shizuoka University, Shizuoka-shi, Shizuoka 422-8529 (JP)
(72) Inventor: YASUTOMI Keita, Hamamatsu-shi, Shizuoka 432-8561 (JP)
(74) Representative: Wittmer, Maximilian
(86) International application number: PCT/JP2023/003864
(87) International publication number: WO 2023/153375

(57) **Abstract**

A measuring system 100 includes a light source 3, a plurality of pixels 25, a control signal generating circuit 13 configured to generate a plurality of gate pulses, a plurality of gate driver circuits 15 configured to apply a plurality of gate pulses to a plurality of pixel groups 27, a reference signal generating circuit 19 configured to generate a reference pulse based on the plurality of gate pulses, a plurality of time difference information generating circuits 23 that are provided to correspond to the plurality of gate driver circuits 15 and configured to generate time difference information corresponding to a time difference between one of the plurality of gate pulses and the reference pulse, and an arithmetic circuit 7 configured to calculate time information corresponding to a light time of flight for each of the plurality of pixels 25 based on charge amounts that are amounts of charges accumulated in the plurality of pixels 25. The arithmetic circuit 7 uses a plurality of pieces of the time difference information generated by the plurality of time difference information generating circuits 23, and deletes a jitter component from the time information calculated for the pixel group 27.

## Description

### Technical Field

The present disclosure relates to a distance measuring device and a distance measuring method for generating distance information for each pixel.

### Background Art

Conventionally, a device that generates an image signal including distance information using a light time of flight has been used (see, for example, Patent Literature 1 below). The device described in Patent Literature 1 below acquires distance information by irradiating an object with pulsed light from a light source, accumulating charges generated accordingly in a pixel in different periods set by a control pulse, reading electric signals corresponding to the accumulated charges, and calculating a distance for each pixel based on the electric signals. Note that, in the above device, when an attempt is made to realize distance accuracy exceeding 100 µm, jitter in a driver circuit for applying the control pulse to the pixel becomes a problem. Therefore, the above device is configured to reduce an influence of the jitter in a distance calculation value by dividing a light receiving surface on which the pixels are two-dimensionally arranged into two, causing the pulsed light reflected by the object to be incident on one light receiving surface, causing the pulsed light reflected by a reference surface to be incident on the other light receiving surface, and acquiring a difference between the distance calculation values calculated based on the respective pulsed light beams.

### Citation List

### Patent Literature

Patent Literature 1: Japanese Unexamined Patent Publication No. 2020-003250

### Summary of Invention

### Technical Problem

In the conventional device described above, it is necessary to spatially separate the pulsed light and separate the reflected light corresponding thereto on the light receiving surface to be incident, and a complicated optical system tends to be required. In addition, a loss of the pulsed light is large, and as a result, an accuracy of the distance calculation tends to decrease.

The present disclosure has been made in view of the above problem, and an object thereof is to provide a distance measuring device and a distance measuring method capable of generating highly accurate distance information with reduced influence of jitter without complicating an optical system.

### Solution to Problem

In order to solve the above problem, a distance measuring device according to an aspect of the present disclosure includes: a light source configured to generate pulsed light; a light source control circuit configured to control a generation timing of the pulsed light; a plurality of pixels arranged two-dimensionally, each of the pixels having a photoelectric conversion region configured to convert light into a charge, a plurality of charge readout regions provided close to the photoelectric conversion region and spaced apart from each other, and a plurality of control electrodes that are respectively provided to correspond to the photoelectric conversion region and the plurality of charge readout regions and configured to apply a plurality of control pulses for charge transfer between the photoelectric conversion region and the plurality of charge readout regions; a control signal generating circuit configured to generate the plurality of control pulses to be applied to the plurality of pixels; a plurality of driver circuits configured to respectively apply the plurality of control pulses generated by the control signal generating circuit to the plurality of control electrodes of a plurality of pixel groups divided from the plurality of pixels; a reference signal generating circuit configured to generate a reference pulse based on the plurality of control pulses generated by the control signal generating circuit; a plurality of time difference information generating circuits provided to correspond to the plurality of driver circuits and configured to generate time difference information corresponding to a time difference between one of the plurality of control pulses applied by each of the plurality of driver circuits and the reference pulse; and a calculation processing unit configured to calculate time information corresponding to a light time of flight for each of the plurality of pixels based on a plurality of charge amounts that are amounts of charges accumulated in the plurality of charge readout regions of the plurality of pixels, and the calculation processing unit deletes a jitter component from the time information calculated for the pixel group by using a plurality of pieces of the time difference information generated by the plurality of time difference information generating circuits.

Alternatively, a distance measuring method according to another aspect of the present disclosure includes: a light source control step of controlling, by a light source control circuit, a light source to generate pulsed light; a control signal generation step of generating, by a control signal generating circuit, for a plurality of two-dimensionally arranged pixels, a plurality of control pulses to be applied to the plurality of pixels, each of the pixels having a photoelectric conversion region configured to convert light into a charge, a plurality of charge readout regions provided close to the photoelectric conversion region and spaced apart from each other, and a plurality of control electrodes that are respectively provided to correspond to the photoelectric conversion region and the plurality of charge readout regions and configured to apply the plurality of control pulses for charge transfer between the photoelectric conversion region and the plurality of charge readout regions; an application step of respectively applying, by a plurality of driver circuits, the plurality of control pulses generated by the control signal generating circuit to the plurality of control electrodes of a plurality of pixel groups divided from the plurality of pixels; a reference signal generation step of generating, by a reference signal generating circuit, a reference pulse based on the plurality of control pulses generated by the control signal generating circuit; a time difference information generation step of generating, by a plurality of time difference information generating circuits provided to correspond to the plurality of driver circuits, time difference information corresponding to a time difference between one of the plurality of control pulses applied by each of the plurality of driver circuits and the reference pulse; and a calculation processing step of calculating, by a calculation processing unit, time information corresponding to a light time of flight for each of the plurality of pixels based on a plurality of charge amounts that are amounts of charges accumulated in the plurality of charge readout regions of the plurality of pixels, and in the calculation processing step, a jitter component is deleted from the time information calculated for the pixel group by using a plurality of pieces of the time difference information generated by the plurality of time difference information generating circuits.

According to the distance measuring device of the above one aspect or the distance measuring method of the above another aspect, the reflected light generated from the object according to the pulsed light from the light source is incident on the plurality of pixels, and the charges generated accordingly in the photoelectric conversion regions of the plurality of pixels are accumulated in the plurality of charge readout regions in the pixels in different periods set by the control pulse, and the light time of flight to the object, that is, the time information corresponding to the distance of the object is calculated for each of the plurality of pixels based on the accumulated charge amounts of the plurality of charge readout regions. At this time, a plurality of control pulses common among the pixels are applied to a corresponding pixel group among the plurality of pixel groups via each of the plurality of driver circuits provided for each of the plurality of divided pixel groups. In addition, the reference pulse is generated based on the plurality of common control pulses, the time difference information related to the time difference between the control pulses applied by the plurality of driver circuits and the reference pulse is generated for each corresponding pixel group, and the jitter component is deleted from the time information calculated for each corresponding pixel group based on the time difference information. As a result, the jitter components caused by the plurality of driver circuits in the distance information can be deleted by the electrical processing. As a result, it is possible to generate highly accurate distance information in which the influence of the jitter is reduced without complicating the optical system.

### Advantageous Effects of Invention

According to the present disclosure, it is possible to generate highly accurate distance information with reduced influence of jitter without complicating an optical system.

### Brief Description of Drawings

FIG. 1 is a diagram illustrating a schematic configuration of a measuring system 100 according to a preferred embodiment of a distance measuring device of the present disclosure.
FIG. 2 is a block diagram illustrating a main part of an image sensor 1 together with a functional configuration of an arithmetic circuit 7.
FIG. 3 is a plan diagram illustrating an element structure of a pixel 25.
FIG. 4 is a circuit diagram of the pixel 25.
FIG. 5 is a plan diagram illustrating an element structure of a pseudo pixel constituting a time difference information generating circuit 23.
FIG. 6 is a circuit diagram of the pseudo pixel constituting the time difference information generating circuit 23.
FIG. 7 is a timing chart for explaining a mechanism of calculation of distance information by a distance calculation unit 101 of the arithmetic circuit 7.
FIG. 8 is a timing chart for explaining a mechanism of calculation of time difference information by a time difference calculation unit 103 of the arithmetic circuit 7.
FIG. 9 is a graph illustrating a measurement result of distance accuracy in the measuring system 100 of the present embodiment.
FIG. 10 is a graph illustrating a measurement result of distance accuracy in the measuring system 100 of the present embodiment.
FIG. 11 is a diagram illustrating a configuration of a time difference information generating circuit 23 according to a modification.

### Description of Embodiments

Hereinafter, a preferred embodiment of a distance measuring device according to the present disclosure will be described in detail with reference to the drawings. In the description of the drawings, the same or corresponding portions are denoted by the same reference numerals, and redundant description is omitted.

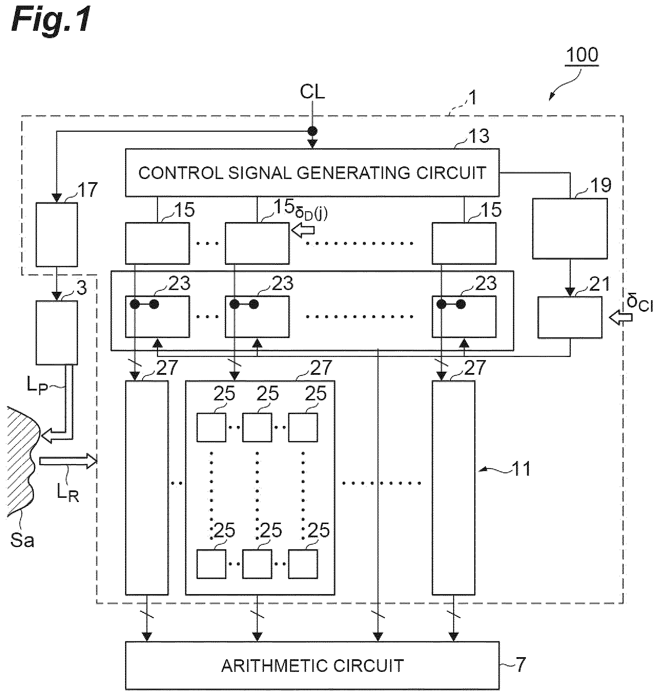

First, an outline of a function and a configuration of a measuring system 100 according to a preferred embodiment of a distance measuring device of the present disclosure will be described with reference to FIG. 1. The measuring system 100 illustrated in FIG. 1 two-dimensionally detects a distance to an object Sa using a time of flight (TOF) method, and is used to generate a two-dimensional distance image or three-dimensional CAD data using the detection result. The measuring system 100 includes an image sensor (imaging element) 1, a light source 3 that emits light, and an arithmetic circuit (calculation processing unit) 7 that calculates distance information.

The light source 3 is a device that generates pulsed light L_{P} to irradiate the object Sa in order to perform distance measurement by the TOF method. The light source 3 includes, for example, a semiconductor light emitting element such as a light emitting diode or a laser diode, and a drive circuit that drives the semiconductor light emitting element. As the light source 3, an element that generates light in a wavelength region such as a near-infrared region or a visible light region can be used. The light source 3 is configured to be capable of emitting, for example, pulsed light having a pulse width of 100 psec. Note that the pulse width of the light emitted from the light source 3 is not limited to the above value, and can be set to various values.

The image sensor 1 includes a light receiving surface 11, a control signal generating circuit 13, a plurality of gate driver circuits 15, a light source driver circuit (light source control circuit) 17, a reference signal generating circuit 19, a reference signal application circuit 21, and a plurality of time difference information generating circuits 23, and these circuits are integrated on the same semiconductor chip or on a three-dimensionally stacked chip. Note that the arithmetic circuit 7 is configured on a circuit outside the image sensor 1, but may be integrated on the same semiconductor chip together with the image sensor 1.

The light receiving surface 11 has a plurality of pixels 25 arranged two-dimensionally. Specifically, the light receiving surface 11 includes a plurality of pixels 25 arranged in a two-dimensional matrix of N_{V} rows and N_{H} columns (N_{V} and N_{H} are integers of 2 or more), and constitutes a rectangular imaging region, and is one-dimensionally divided into M (M is an integer of 2 or more) for each of the pixels 25 in the plurality of adjacent columns to constitute M pixel groups 27. To these M pixel groups 27, a common gate pulse is applied from a corresponding gate driver circuit 15 among a plurality of gate driver circuits 15 to be described later (details will be described later).

The control signal generating circuit 13 generates and outputs a plurality of gate pulses (control pulses) for controlling timings of exposure (charge transfer) and charge discharge in each pixel 25 of the light receiving surface 11 based on a clock pulse CL input from the outside of the image sensor 1. In the present embodiment, the control signal generating circuit 13 generates four gate pulses D_{G1}, D_{G2}, D_{G3}, and D_{GD}. Here, the control signal generating circuit 13 repeatedly generates the four gate pulses D_{G1}, D_{G2}, D_{G3}, and D_{GD} for each periodic frame period, for example. In addition, the control signal generating circuit 13 may repeatedly generate the four gate pulses D_{G1}, D_{G2}, D_{G3}, and D_{GD} a plurality of times in a periodic frame period. Note that the control signal generating circuit 13 may be divided for each gate driver circuit 15, or may be divided so as to share the plurality of gate driver circuits 15.

M gate driver circuits 15 are provided to correspond to each of the M pixel groups 27 divided on the light receiving surface 11, and each of the gate driver circuits applies the four gate pulses D_{G1}, D_{G2}, D_{G3}, and D_{GD} generated by the control signal generating circuit 13 to control electrodes of all the pixels 25 included in the corresponding pixel group 27. These M gate driver circuits 15 include an inverter circuit and have a function of applying four gate pulses D_{G1}, D_{G2}, D_{G3}, and D_{GD} to the plurality of pixels 25 in the pixel group 27. Note that the gate driver circuit 15 may include a circuit that converts a voltage into a voltage suitable for driving the control electrode included in the pixel 25. The M gate driver circuits 15 also apply the amplified four gate pulses D_{G1}, D_{G2}, D_{G3}, and D_{GD} to the control electrodes of the time difference information generating circuits 23 provided correspondingly.

The light source driver circuit 17 generates a trigger signal for controlling an irradiation timing of the pulsed light L_{P} by the light source 3 based on the clock pulse CL input from the outside, and supplies the trigger signal to the light source 3. Here, the light source driver circuit 17 repeatedly generates a trigger signal synchronized with a gated pulse.

The reference signal generating circuit 19 generates a reference pulse CI with reference to one of the four gate pulses D_{G1}, D_{G2}, D_{G3}, and D_{GD} generated by the control signal generating circuit 13. For example, the reference signal generating circuit 19 generates the reference pulse CI delayed by a predetermined time with respect to the gate pulse D_{G1} for each frame period.

The reference signal application circuit 21 applies the reference pulse CI generated by the reference signal generating circuit 19 to the plurality of time difference information generating circuits 23. The reference signal application circuit 21 includes a built-in inverter circuit and has a function of applying the reference pulse CI to the plurality of time difference information generating circuits 23.

M time difference information generating circuits 23 are provided to correspond to the plurality of gate driver circuits 15, and each of the M time difference information generating circuits 23 is a circuit for measuring a time difference between one of the four gate pulses D_{G1}, D_{G2}, D_{G3}, and D_{GD} applied by the corresponding gate driver circuit 15 among the plurality of gate driver circuits 15 and the reference pulse CI applied by the reference signal application circuit 21 and generating time difference information corresponding to the time difference. Specifically, the plurality of time difference information generating circuits 23 measure and generate the time difference information corresponding to the time difference between the gate pulse D_{G1} and the reference pulse CI in cooperation with the arithmetic circuit 7. The gate pulse to be measured is not limited to D_{G1}

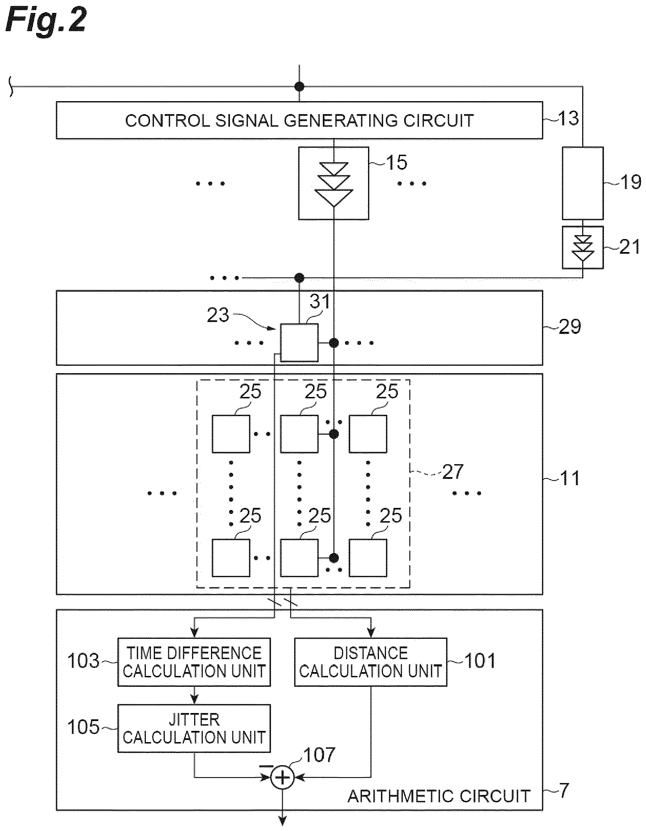

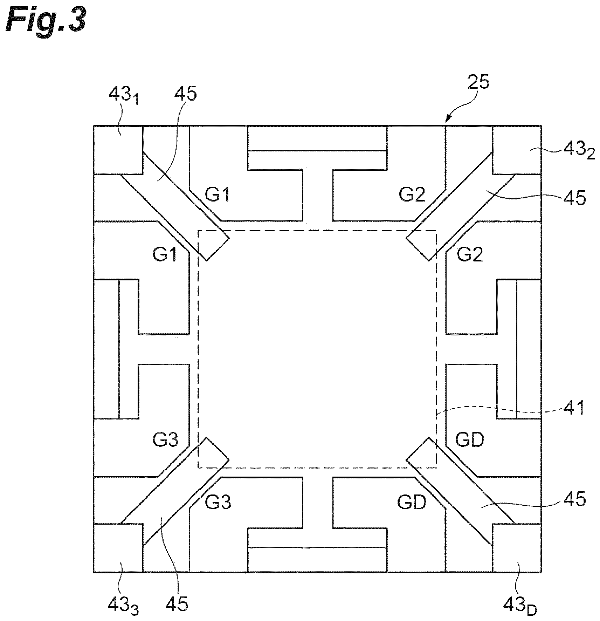

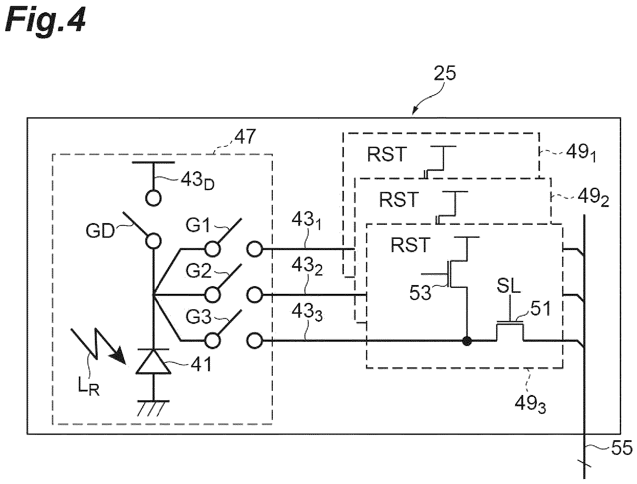

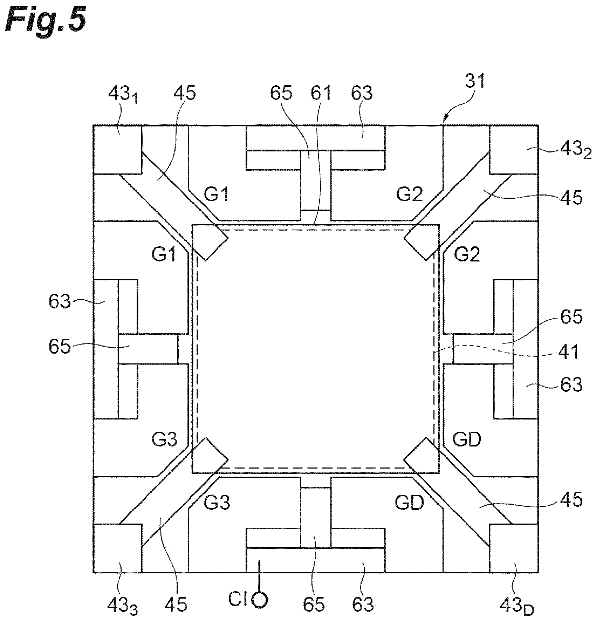

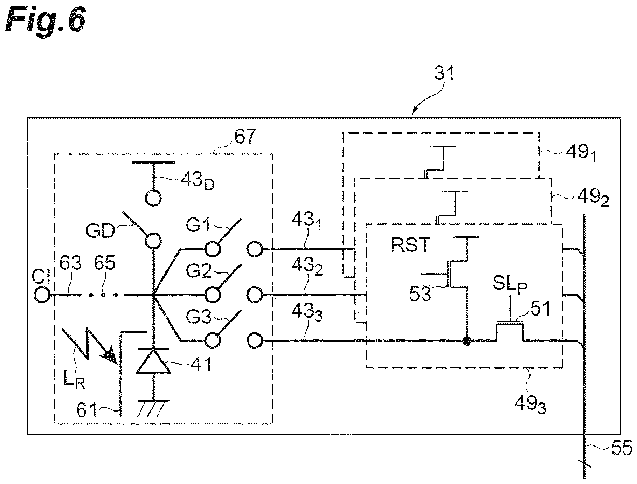

Next, a configuration of a main part of the image sensor 1 and a functional configuration of the arithmetic circuit 7 will be described in detail. FIG. 2 is a block diagram illustrating a main part of the image sensor 1 together with a functional configuration of the arithmetic circuit 7, FIG. 3 is a plan diagram illustrating an element structure of the pixel 25, FIG. 4 is a circuit diagram of the pixel 25, FIG. 5 is a plan diagram illustrating an element structure of a pseudo pixel constituting the time difference information generating circuit 23, and FIG. 6 is a circuit diagram of the pseudo pixel constituting the time difference information generating circuit 23. However, the present embodiment is not limited to the configurations illustrated in FIGS. 3 to 6.

As illustrated in FIG. 2, the image sensor 1 has a light receiving surface 11 including M pixel groups 27 divided for each of a plurality of mutually adjacent pixel columns. In the present embodiment, the time difference information generating circuit 23 included in the image sensor 1 includes a pseudo pixel 31 provided so as to be close to the corresponding pixel group 27 in a pseudo pixel surface 29 adjacent to the light receiving surface 11 in a direction along an arrangement direction of the pixel columns. However, the pseudo pixel 31 may not be on the same chip as long as the gate driver circuit 15 is common.

As illustrated in FIG. 3, in the pixel 25, a photoelectric conversion region 41 that converts reflected pulsed light L_{R} generated from the object Sa into a charge is provided at a center, and three charge readout regions 43₁ to 43₃ and a charge discharge region 43_{D} are disposed so as to be separated from each other at four corners of the pixel 25 around the photoelectric conversion region 41 and to be close to the photoelectric conversion region 41. Further, four pairs of control electrodes G1 to G3 and GD are provided so as to sandwich charge transfer paths 45 between the photoelectric conversion region 41 and each of the charge readout regions 43₁ to 43₃ and the charge discharge region 43_{D} from both sides. Each of these four pairs of control electrodes G1 to G3 and GD functions as a potential forming unit that forms a potential for transferring a charge from the photoelectric conversion region 41 toward each of the charge readout regions 43₁ to 43₃ and the charge discharge region 43_{D} via the charge transfer paths 45 when the gate pulses D_{G1}, D_{G2}, D_{G3}, and D_{GD} are applied from the gate driver circuit 15.

FIG. 4 illustrates a circuit configuration of the pixel 25. In addition to a main circuit unit 47 including the photoelectric conversion region 41, the charge readout regions 43₁ to 43₃, the charge discharge region 43_{D}, and the control electrodes G1 to G3 and GD, the pixel 25 includes three signal readout circuits 49₁, 49₂, and 49₃ that read out electric signals corresponding to the amounts of accumulated charges from each of the charge readout regions 43₁ to 43₃. Each of the signal readout circuits 49₁, 49₂, and 49₃ includes a switching transistor 51 and a reset transistor 53. When a control signal SL for selecting a pixel column is given from a control circuit in the image sensor 1 (not illustrated) to the signal readout circuits 49₁, 49₂, and 49₃, an electric signal having a potential corresponding to a charge amount accumulated in the charge readout regions 43₁ to 43₃ is output to the arithmetic circuit 7 via a signal line 55. On the other hand, when a reset signal RST is given to the signal readout circuits 49₁, 49₂, and 49₃, the charges accumulated in the charge readout regions 43₁ to 43₃ are reset.

As illustrated in FIG. 5, the pseudo pixel 31 includes the same configuration as the pixel 25, and a light shielding member 61, charge injection regions 63, and charge transfer paths 65 are added. The light shielding member 61 is disposed so as to cover the entire surface of the photoelectric conversion region 41, and is made of a light shielding material capable of blocking the reflected pulsed light L_{R} from the object Sa so as not to enter the photoelectric conversion region 41. The charge injection region 63 is a region that accumulates charges in order to inject charges into the photoelectric conversion region 41, and is, for example, an n-type semiconductor region. The charge injection region 63 is close to the photoelectric conversion region 41 with a charge transfer path 65 for transferring charges interposed therebetween. The pseudo pixel 31 is configured such that the reference pulse CI can be applied from the reference signal application circuit 21 to the charge injection region 63, and forms a potential that supplies a charge from the charge injection region 63 toward the photoelectric conversion region 41 via the charge transfer path 65 when the reference pulse CI is applied. As a result, the pseudo pixel 31 can be operated such that the reflected pulsed light L_{R} is incident in a pseudo manner at the generation timing of the reference pulse CI.

FIG. 6 illustrates a circuit configuration of the pseudo pixel 31. Compared with the main circuit unit 47 of the pixel 25, the pseudo pixel 31 includes a main circuit unit 67 to which a light shielding member 61, a charge injection region 63, and a charge transfer path 65 are added, and three signal readout circuits 49₁, 49₂, and 49₃ having a configuration similar to that of the pixel 25. In the pseudo pixel 31 having such a configuration, an electric signal having a potential corresponding to the charge amount accumulated in the charge readout regions 43₁ to 43₃ is output to the arithmetic circuit 7 via the signal line 55 by a control signal SL_{P} given from a control circuit in the image sensor 1 (not illustrated) to the signal readout circuits 49₁, 49₂, and 49₃. On the other hand, when the reset signal RST is given to the signal readout circuits 49₁, 49₂, and 49₃, the charges accumulated in the charge readout regions 43₁ to 43₃ can be reset.

Returning to FIG. 2, a functional configuration of the arithmetic circuit 7 will be described. The arithmetic circuit 7 functionally includes a distance calculation unit 101, a time difference calculation unit 103, a jitter calculation unit 105, and a subtraction unit 107. These functional units function at each timing of calculating the distance information of the plurality of pixels 25 included in each pixel group 27 corresponding to one frame period. Furthermore, the time difference calculation unit 103 functions as the time difference information generating circuit 23 in cooperation with the pseudo pixel 31. Hereinafter, the function of each functional unit of the arithmetic circuit 7 will be described.

For each pixel 25 included in the pixel group 27, the distance calculation unit 101 calculates, as distance information, a round-trip light time of flight T_{TOF} corresponding to the distance between the object Sa and the image sensor 1 by a predetermined calculation method using electrical signals corresponding to the three signal readout circuits 49₁, 49₂, and 49₃ output from the pixels 25. Then, the distance calculation unit 101 outputs the calculated light time of flight T_{TOF} for each pixel 25 to the subtraction unit 107.

For example, the distance calculation unit 101 uses the following method as the predetermined calculation method. That is, when a value of an electrical signal corresponding to the signal readout circuit 49₁ is N₁ and a value of an electrical signal corresponding to the signal readout circuit 49₂ is N₂, the distance calculation unit 101 calculates light time of flight T_{TOF} by the following formula;

T_{TOF} = {N₂/(N₁ + N₂)} × t₁. In the above formula, t₁ is a time corresponding to a pulse width of the gate pulses D_{G1} and D_{G2}. Note that the predetermined calculation method is not limited to the above, and as described in WO No. 2014/181619, another calculation formula may be used to approximate the response characteristic of the light receiving surface 11 by a linear function, a quadratic function, or a high-order function. Note that the predetermined calculation method is a method of calculating distance information using two electric signals output from each pixel 25, but may be a method of calculating distance information using three or more electric signals output from each pixel 25.

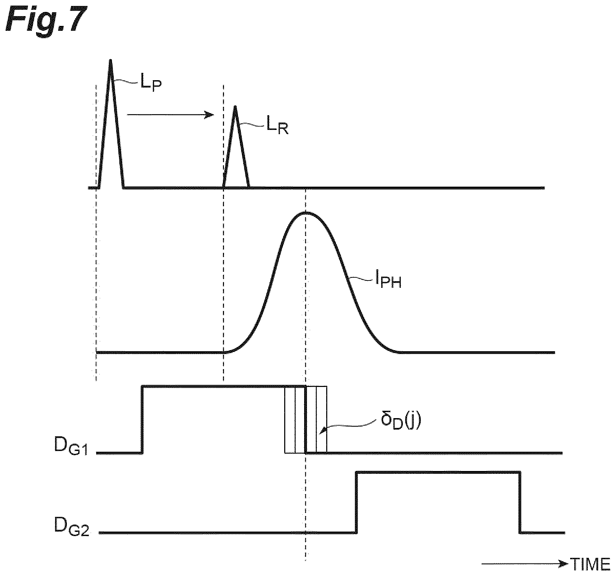

FIG. 7 is a timing chart for explaining a mechanism of calculation of distance information by the distance calculation unit 101. When the object Sa is irradiated with the pulsed light L_{P} from the light source 3 at a timing with reference to the clock pulse CL input from the outside, the reflected pulsed light L_{R} reflected accordingly by the object Sa is incident on each pixel 25 of the image sensor 1, and a photocurrent I_{PH} is generated in the photoelectric conversion region 41 of each pixel 25 at a timing corresponding to the reflected pulsed light L_{R}. In addition, the gate pulses D_{G1} and D_{G2} are applied to each of the control electrodes G1 and G2 of each pixel 25 at the timing with reference to the clock pulse CL, and the charge generated by the photocurrent I_{PH} is distributed to the charge readout regions 43₁ and 43₂ of each pixel 25 at the timing defined by the gate pulses D_{G1} and D_{G2}. The distance calculation unit 101 calculates the light time of flight T_{TOF} by calculating a ratio of the amount of charges distributed to the charge readout regions 43₁ and 43₂. In this manner, the light time of flight T_{TOF} calculated for each pixel 25 in a j-th (j is an integer of 1 or more and M or less) pixel group 27 among the M pixel groups 27 includes a jitter component δ_{D} (j) caused by the jitter generated in a j-th gate driver circuit 15 provided to correspond to the j-th pixel group 27 among the M gate driver circuits 15. That is, the jitter generated in the j-th gate driver circuit 15 causes the jitter to occur at a falling timing of the gate pulse D_{G1} applied to the pixel 25 of the j-th pixel group 27. Therefore, when the generation timing of the photocurrent I_{PH} straddles the two gate pulses D_{G1} and D_{G2}, the jitter component δ_{D} (j) is generated in the light time of flight T_{TOF} calculated by the distance calculation unit 101.

By using the electrical signals corresponding to the three signal readout circuits 49₁, 49₂, and 49₃ output from the pseudo pixel 31 provided to correspond to the pixel group 27, the time difference calculation unit 103 calculates a pseudo light time of flight T_{CI} when it is assumed that the reflected pulsed light L_{R} is pseudo incident from the object Sa at the timing of the reference pulse CI as the time difference information by a calculation method similar to that of the distance calculation unit 101. Then, the distance calculation unit 101 outputs the calculated pseudo light time of flight T_{CI} to the jitter calculation unit 105.

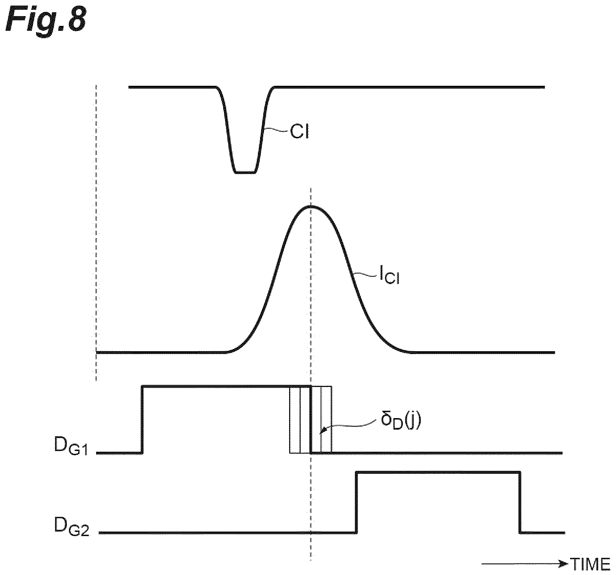

FIG. 8 is a timing chart for explaining a mechanism of calculation of time difference information by the time difference calculation unit 103. The reference pulse CI is generated at a timing with reference to one of the four gate pulses D_{G1}, D_{G2}, D_{G3}, and D_{GD} generated by the control signal generating circuit 13, and a pseudo photocurrent I_{CI} is injected into the photoelectric conversion region 41 of the pseudo pixel 31 at a timing corresponding to the reference pulse CI. In addition, the gate pulses D_{G1} and D_{G2} are applied to each of the control electrodes G1 and G2 of the pseudo pixel 31 at the timing with reference to the clock pulse CL, and the charge generated by the photocurrent I_{CI} is distributed to the charge readout regions 43₁ and 43₂ of the pseudo pixel 31 at the timing defined by the gate pulses D_{G1} and D_{G2}. The time difference calculation unit 103 calculates the pseudo light time of flight T_{CI} by calculating a ratio of the amount of charges allocated to the charge readout regions 43₁ and 43₂. Since the pseudo light time of flight T_{CI} is a numerical value corresponding to the timing of the reference pulse CI with reference to the gate pulses D_{G1} and D_{G2}, the pseudo light time of flight T_{CI} is also time difference information corresponding to a time difference between any one of the gate pulses D_{G1} and D_{G2} and the reference pulse CI. In this way, the pseudo light time of flight T_{CI} calculated for the pseudo pixel 31 corresponding to the j-th pixel group 27 in the M pixel groups 27 includes the jitter component δ_{D} (j) caused by the jitter generated in the j-th gate driver circuit 15 and a jitter component δ_{CI} caused by the jitter generated in the reference signal application circuit 21.

The jitter calculation unit 105 obtains an average value of the M pseudo light times of flight T_{CI} calculated for each of the M pixel groups 27 by the time difference calculation unit 103. The jitter components δ_{D} (1) to δ_{D} (M) caused by the jitter generated in the M gate driver circuits 15 are averaged to remove the jitter components δ_{D} (1) to δ_{D} (M), and the average value becomes a value in which only the jitter component δ_{CI} is added to the true pseudo light time of flight t_{CI}. Furthermore, the jitter calculation unit 105 subtracts the average value from each value of the pseudo light time of flight T_{CI} for each of the M pixel groups 27 to obtain a difference, thereby calculating each value of the jitter components δ_{D} (1) to δ_{D} (M) caused by the jitter for each of the M gate driver circuits 15. The jitter calculation unit 105 outputs the calculated values of the jitter components δ_{D} (1) to δ_{D} (M) to the subtraction unit 107.

The subtraction unit 107 subtracts the jitter component δ_{D} (j) calculated corresponding to the pixel group 27 from the light time of flight T_{TOF} calculated for each pixel 25 included in the j-th pixel group 27, thereby deleting the jitter component δ_{D} (j) from the light time of flight T_{TOF}. Furthermore, the subtraction unit 107 similarly deletes the jitter components δ_{D} (1) to δ_{D} (M) from the light time of flight T_{TOF} for each of the pixels 25 included in all the pixel groups 27. In the arithmetic circuit 7, a two-dimensional distance image or three-dimensional CAD data is finally generated and output based on the light times of flight T_{TOF} of all the pixels 25 from which the jitter component δ_{D} (j) has been deleted by the subtraction unit 107.

Next, a procedure of the distance measuring method according to the present embodiment will be described. The distance measuring method of the present embodiment includes the following steps. First, the light source driver circuit 17 controls the light source 3 so as to generate pulsed light (light source control step). Furthermore, the control signal generating circuit 13 generates gate pulses D_{G1}, D_{G2}, D_{G3}, and D_{GD} to be applied to the plurality of pixels 25 (control signal generation step). Then, the gate driver circuits 15 respectively apply the gate pulses D_{G1}, D_{G2}, D_{G3}, and D_{GD} to the plurality of control electrodes of the plurality of pixel groups 27 divided from the plurality of pixels 25 (application step). Further, the reference signal generating circuit 19 generates the reference pulse CI based on the gate pulses D_{G1}, D_{G2}, D_{G3}, and D_{GD} (reference signal generation step). In addition, the plurality of time difference information generating circuits 23 provided to correspond to the gate driver circuits 15 generate time difference information corresponding to a time difference between one of the plurality of gate pulses D_{G1}, D_{G2}, D_{G3}, and D_{GD} applied by each of the gate driver circuits 15 and the reference pulse CI (time difference information generation step). Furthermore, the arithmetic circuit 7 calculates time information corresponding to a light time of flight for each of the plurality of pixels 25 based on a plurality of charge amounts, which are the amounts of charges accumulated in the plurality of charge readout regions of the plurality of pixels 25 (calculation processing step). In this calculation processing step, the arithmetic circuit 7 deletes the jitter component from the time information calculated for the pixel group 27 using the plurality of pieces of time difference information generated by the plurality of time difference information generating circuits 23.

Here, effects of the measuring system 100 of the present embodiment and the distance measuring method using the same will be described.

According to the measuring system 100 and the distance measuring method using the same, the reflected pulsed light L_{R} generated from the object Sa according to the pulsed light L_{P} from the light source 3 is incident on the plurality of pixels 25, charges generated accordingly in the photoelectric conversion regions of the plurality of pixels 25 are accumulated in the plurality of charge readout regions in the pixel 25 in different periods set by the gate pulse, and the light time of flight to the object Sa, that is, time information corresponding to the distance of the object Sa is calculated for each of the plurality of pixels 25 based on the accumulated charge amounts of the plurality of charge readout regions. At this time, a plurality of gate pulses common among the pixels 25 are applied to the corresponding pixel group 27 among the plurality of pixel groups 27 via each of the plurality of gate driver circuits 15 provided for each of the plurality of pixel groups 27 divided one-dimensionally. In addition, a reference pulse is generated based on the plurality of common gate pulses, time difference information related to the time difference between the gate pulses applied by the plurality of gate driver circuits 15 and the reference pulse is generated for each corresponding pixel group 27, and a jitter component is deleted from the time information calculated for each corresponding pixel group 27 based on the time difference information. As a result, the jitter components caused by the plurality of gate driver circuits 15 in the distance information can be deleted by the electrical processing. As a result, it is possible to generate highly accurate distance information in which the influence of the jitter is reduced without complicating the optical system.

In addition, the arithmetic circuit 7 can extract the jitter components caused by the plurality of gate driver circuits 15 excluding the jitter and the like included in the reference pulse with high accuracy. Then, by subtracting this jitter component from the time information using the arithmetic circuit 7, it is possible to generate highly accurate distance information.

Furthermore, with the configuration of the image sensor 1 and the arithmetic circuit 7, the time difference information can be generated with a calculation function similar to the time information using the pseudo pixel 31 having the same configuration as the pixel 25. As a result, downsizing of the measuring system 100 and simplification of the functional configuration of the measuring system 100 can be realized.

Furthermore, the pseudo pixel 31 is configured such that the photoelectric conversion region 41 is covered with the light shielding member 61. According to such a configuration, it is possible to generate the time difference information with less error using the pseudo pixel 31 having the same configuration as the pixel 25, and it is possible to generate the highly accurate distance information while downsizing the measuring system 100.

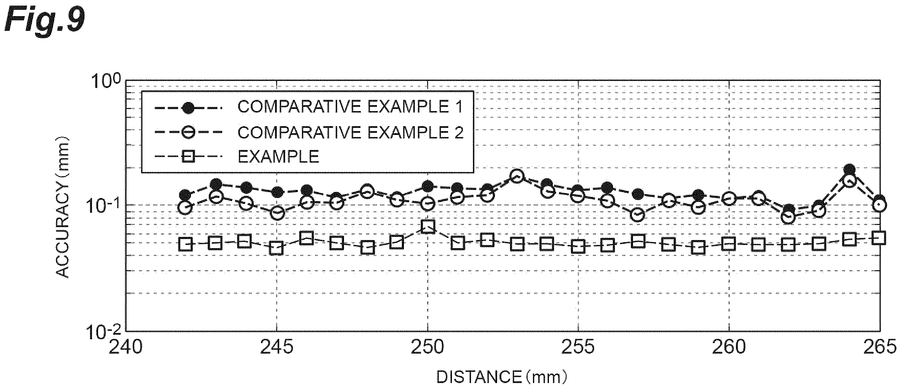

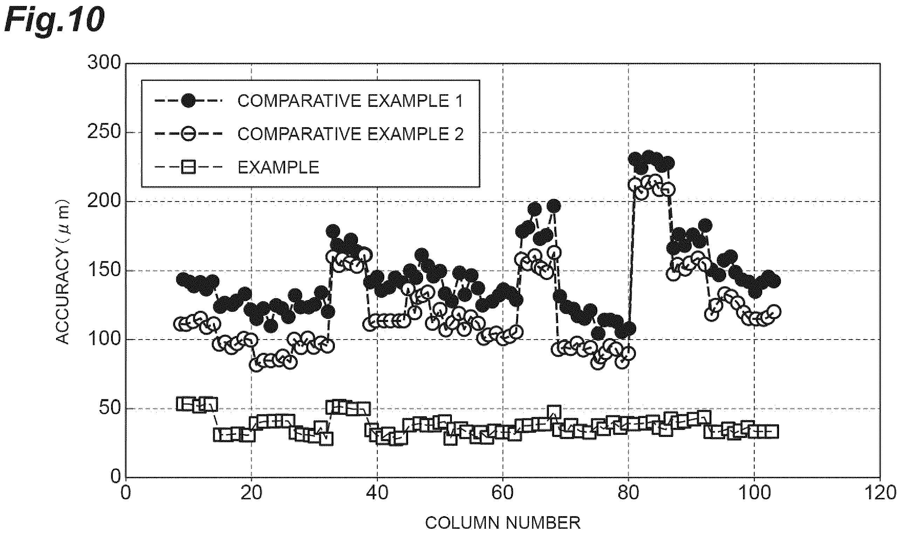

FIGS. 9 and 10 are graphs illustrating measurement results of distance accuracy in the measuring system 100 of the present embodiment.

FIGS. 9 and 10 illustrate average values of a distance accuracy of distance information calculated for various distances and a distance accuracy of distance information for each pixel column in ten frame periods in Comparative Example 1, Comparative Example 2, and Example, respectively. Comparative Example 1 is an example in which a configuration of a measuring system not having a jitter reduction function is adopted, Comparative Example 2 is an example of a measuring system in which a mechanism for reducing jitter using two light receiving surfaces disclosed in Japanese Unexamined Patent Publication No. 2020-003250 is adopted, and Example is an example of a measuring system in which the configuration of the present embodiment is combined with the configuration of Comparative Example 2. From these results, it can be seen that by adopting the present embodiment, the accuracy of the distance information calculated for various distance ranges is significantly improved in all pixel columns as compared with Comparative Examples 1 and 2. In particular, according to the present embodiment, distance accuracy of 38 µm is realized by taking a frame average.

Note that the present invention is not limited to the aspects of the above-described embodiment.

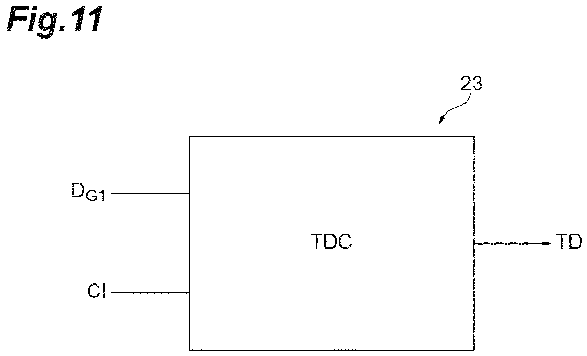

For example, the time difference information generating circuit 23 included in the image sensor 1 of the above embodiment may be realized by another configuration. For example, as illustrated in FIG. 11, as the time difference information generating circuit 23, a time measurement circuit (TDC: Time-to-Digital Converter) that receives the gate pulse D_{G1} and the reference pulse CI and generates a digital signal TD indicating a time difference between rises or falls of two pulses as time difference information may be used. Also in this case, the jitter components caused by the plurality of gate driver circuits 15 in the distance information can be deleted by the electrical processing.

Here, in the above embodiment, it is preferable that the calculation processing unit calculates an average value of the plurality of pieces of time difference information generated by the plurality of time difference information generating circuits, and subtracts a difference between the time difference information generated by the time difference information generating circuit corresponding to the pixel group and the average value from the time information calculated for the pixel group, thereby deleting the jitter component from the time information. By adopting such a configuration, the jitter components caused by the plurality of driver circuits excluding the jitter and the like included in the reference pulse can be extracted with high accuracy, and the highly accurate distance information can be generated by subtracting the jitter components from the time information.

In addition, it is also preferable that the time difference information generating circuit includes a pseudo pixel having a photoelectric conversion region, a plurality of charge readout regions, and a plurality of control electrodes, supplies a charge in a pseudo manner according to a timing of a reference pulse to the photoelectric conversion region of the pseudo pixel, and calculates time information as time difference information based on a plurality of charge amounts that are amounts of charges accumulated in the plurality of charge readout regions of the pseudo pixel based on the plurality of control pulses applied by the corresponding driver circuit. In this case, since the time difference information can be generated by a calculation function similar to that of the time information using the pseudo pixel having the same configuration as the pixel, it is possible to realize downsizing of the device and simplification of the functional configuration of the device.

Furthermore, the pseudo pixel is preferably configured such that the photoelectric conversion region is covered with a light shielding material. According to such a configuration, it is possible to generate time difference information with less error using a pseudo pixel having the same configuration as the pixel, and it is possible to generate highly accurate distance information while downsizing the device.

Furthermore, the time difference information generating circuit preferably includes a time measurement circuit that generates a time difference between one of the plurality of control pulses and the reference pulse as time difference information. Also in this case, the jitter components caused by the plurality of driver circuits in the distance information can be deleted by the electrical processing.

### Reference Signs List

- 1: Image sensor (imaging element)
- 3: Light source
- 7: Arithmetic circuit (calculation processing unit)
- 13: Control signal generating circuit
- 15: Gate driver circuit
- 17: Light source driver circuit (light source control circuit)
- 19: Reference signal generating circuit
- 23: Time difference information generating circuit
- 25: Pixel
- 31: Pseudo pixel
- 27: Pixel group
- 41: Photoelectric conversion region
- 43₁ to 43₃: Charge readout region
- 61: Light shielding member
- 100: Measuring system
- CI: Reference pulse
- G1 to G3, GD: Control electrode
- L_{P}: Pulsed light
- δ_{CI}, δ_{D}: Jitter component

## Claims

1. A distance measuring device comprising:
a light source configured to generate pulsed light;
a light source control circuit configured to control a generation timing of the pulsed light;
a plurality of pixels arranged two-dimensionally, each of the pixels having a photoelectric conversion region configured to convert light into a charge, a plurality of charge readout regions provided close to the photoelectric conversion region and spaced apart from each other, and a plurality of control electrodes that are respectively provided to correspond to the photoelectric conversion region and the plurality of charge readout regions and configured to apply a plurality of control pulses for charge transfer between the photoelectric conversion region and the plurality of charge readout regions;
a control signal generating circuit configured to generate the plurality of control pulses to be applied to the plurality of pixels;
a plurality of driver circuits configured to respectively apply the plurality of control pulses generated by the control signal generating circuit to the plurality of control electrodes of a plurality of pixel groups divided from the plurality of pixels;
a reference signal generating circuit configured to generate a reference pulse based on the plurality of control pulses generated by the control signal generating circuit;
a plurality of time difference information generating circuits provided to correspond to the plurality of driver circuits and configured to generate time difference information corresponding to a time difference between one of the plurality of control pulses applied by each of the plurality of driver circuits and the reference pulse; and
a calculation processing unit configured to calculate time information corresponding to a light time of flight for each of the plurality of pixels based on a plurality of charge amounts that are amounts of charges accumulated in the plurality of charge readout regions of the plurality of pixels, wherein
the calculation processing unit deletes a jitter component from the time information calculated for the pixel group by using a plurality of pieces of the time difference information generated by the plurality of time difference information generating circuits.

2. The distance measuring device according to claim 1, wherein
the calculation processing unit calculates an average value of the plurality of pieces of time difference information generated by the plurality of time difference information generating circuits, and deletes the jitter component from the time information by subtracting a difference between the time difference information generated by the time difference information generating circuit corresponding to the pixel group and the average value from the time information calculated for the pixel group.

3. The distance measuring device according to claim 1 or 2, wherein
the time difference information generating circuit includes a pseudo pixel having the photoelectric conversion region, the plurality of charge readout regions, and the plurality of control electrodes, supplies a charge in a pseudo manner according to a timing of the reference pulse to the photoelectric conversion region of the pseudo pixel, and calculates the time information as the time difference information based on a plurality of charge amounts that are amounts of charges accumulated in the plurality of charge readout regions of the pseudo pixel based on the plurality of control pulses applied by the corresponding driver circuit.

4. The distance measuring device according to claim 3, wherein
the pseudo pixel is configured such that the photoelectric conversion region is covered with a light shielding material.

5. The distance measuring device according to claim 1 or 2, wherein
the time difference information generating circuit includes a time measurement circuit that generates a time difference between one of the plurality of control pulses and the reference pulse as the time difference information.

6. A distance measuring method comprising:
a light source control step of controlling, by a light source control circuit, a light source to generate pulsed light;
a control signal generation step of generating, by a control signal generating circuit, for a plurality of two-dimensionally arranged pixels, a plurality of control pulses to be applied to the plurality of pixels, each of the pixels having a photoelectric conversion region configured to convert light into a charge, a plurality of charge readout regions provided close to the photoelectric conversion region and spaced apart from each other, and a plurality of control electrodes that are respectively provided to correspond to the photoelectric conversion region and the plurality of charge readout regions and configured to apply the plurality of control pulses for charge transfer between the photoelectric conversion region and the plurality of charge readout regions;
an application step of respectively applying, by a plurality of driver circuits, the plurality of control pulses generated by the control signal generating circuit to the plurality of control electrodes of a plurality of pixel groups divided from the plurality of pixels;
a reference signal generation step of generating, by a reference signal generating circuit, a reference pulse based on the plurality of control pulses generated by the control signal generating circuit;
a time difference information generation step of generating, by a plurality of time difference information generating circuits provided to correspond to the plurality of driver circuits, time difference information corresponding to a time difference between one of the plurality of control pulses applied by each of the plurality of driver circuits and the reference pulse; and
a calculation processing step of calculating, by a calculation processing unit, time information corresponding to a light time of flight or each of the plurality of pixels based on a plurality of charge amounts that are amounts of charges accumulated in the plurality of charge readout regions of the plurality of pixels, wherein
in the calculation processing step, a jitter component is deleted from the time information calculated for the pixel group by using a plurality of pieces of the time difference information generated by the plurality of time difference information generating circuits.
